# EUROPEAN PATENT APPLICATION

(11) **EP 2 223 618 A1**
(43) Date of publication of application: **01.09.2010**
(21) Application number: 10154871.7
(22) Date of filing: 26.02.2010
(51) Int. Cl.: A23L 3/04, A23L 3/00

(54) **Hydrostatic sterilization device**

(30) Priority: 27.02.2009 NL 2002579
(71) Applicant: Teeling Petfood B.V., 1704 SB Heerhugowaard (NL)
(72) Inventor: Roelevink, Jan-Jaap, 3846 CB Harderwijk (NL)
(74) Representative: Ketelaars, Maarten F.J.M.

(57) **Abstract**

The invention relates to a hydrostatic sterilization device comprising: a heating section, a sterilization section and a cooling section. The heating section, sterilization section and cooling section form a continuous duct through which an endless conveyor comprising a number of receptacles for accommodating products passes. A part of the duct, in the heating section and cooling section, comprises a water leg containing a liquid column for producing hydrostatic pressure in the sterilization section. The water leg of the heating section is connected to an inlet leg of the sterilization section. An outlet leg of the sterilization section is connected to a water leg in the cooling section. On the upper side, the outlet leg is provided with an atomizing device for atomizing a liquid which has a temperature which is lower than the temperature in the inlet leg. As a result thereof, the difference in temperature between the product and the liquid in the water leg of the cooling section is reduced before the product is passed through the liquid column of the cooling section.

## Description

### TECHNICAL FIELD OF THE INVENTION

The invention relates to a hydrostatic sterilization device. The invention furthermore relates to a method for use with a hydrostatic sterilization device and a sterilization process.

### BACKGROUND OF THE INVENTION

A hydrostatic sterilization device of the abovementioned type is known from NL6407288A. Hydrostatic boiling and sterilization devices are generally 15 to 18 m tall in order to accommodate a water column, which is approximately 12 m tall. The device contains a supply or preheating section, a sterilization section or steam chamber and a discharge or cooling section. Each section is provided with ducts, which ducts are connected to one another at the transition from one section to the next section. The ducts which run through the device are generally sufficiently wide and large to accommodate an endless conveyor. The endless conveyor comprises receptacles into which products can be placed.

Said sterilization device is used for sterilizing products which are contained in packaging by means of a continuous process. The packaging may be made of metal, for example a sealed tin can, glass, for example a glass jar provided with a lid, or another material which can withstand the temperature in the sterilization section.

NL6411423A discloses a method and device for the continuous thermal treatment of products which are contained in gastight and watertight receptacles. It describes the continuous sterilization and cooling under hydrostatic pressure, with the sterilization chamber and cooling chamber being separated from one another by means of a water conduit.

In the case of a tin can and glass jar provided with a lid, a packaging is provided which can readily withstand the pressure which results in the packaging from the expansion of the product to be sterilized in the packaging as a result of heating, while the volume inside the packaging does not increase proportionally to the expansion of the product. Characteristic of the packaging is the fact that it often consists of an open container for the product and a lid for closing the open container. There are, however, new packaging methods in which the open container and the lid are connected to one another by means of an adhesive or heat-sealed connection and hermetically seal the product in the container. These connections often become weaker upon heating. In addition, the thickness of the metal wall of the container and lid is being increasingly reduced, as a result of which they are more easily deformed. Deformation of the packaging may result in the product no longer being suitable for sale while the packaging containing the product meets the imposed requirements with respect to storage life and quality. When the pressure inside the packaging increases to an excessive degree compared to the pressure on the outside, the packaging may deform, resulting in the product no longer being saleable and, in the worst case, the adhesive connection or heat-sealed connection may become detached, as a result of which the product in the packaging is no longer hermetically sealed and bacteria can attack the product which will thus start to decay.

US3377173 shows a device for heating under pressure comprising a pressurized treatment space. The treatment space consists of a heating section in which the products are heated and a cooling section in which the products are cooled. When leaving the heating section, the products pass through a water seal having a much lower temperature than the temperature in the heating section. As a result thereof, the pressure in the heated products may become excessively high due to rapid cooling down of the packaging, leading to the products deforming and, at worst, bursting open.

### SUMMARY OF THE INVENTION

It is an object of the invention to provide an improved hydrostatic sterilization device which reduces the difference in pressure inside the packaging and the pressure outside the packaging during the sterilization process, thus reducing the waste in the amount of sterilized end product.

A hydrostatic sterilization device according to the invention is **characterized in that,** at least on the upper side, the outlet leg of the sterilization section is provided with a first atomizing device for atomizing a liquid which has a temperature which is lower than the temperature in the inlet leg of the sterilization section in order to reduce the difference in temperature between the product and the liquid in the water leg of the cooling section before the product is passed through the liquid column of the cooling section, and in that the heating section comprises a second atomizing device which is configured to heat products before the products are passed through a liquid column of the heating section in order to reduce the difference in temperature between the product and the liquid in said liquid column.

The invention is based on the insight that rapid temperature and pressure variations during the sterilization process may result in the pressure in the product, for example a small aluminium tray provided with a lid by adhesion or heat-sealing and containing a substance which can decay, increasing excessively rapidly to such a pressure that the tray deforms or that even the adhesive layer or heat-sealed connection becomes detached and the product explodes, as it were. This effect is further reinforced by the fact that the adhesive layer or heat-sealed connection is less strong at relatively high temperatures than at relatively low temperatures. The pressure in the product can also result from the fact that the coefficient of expansion of the packaging and the packaged substance differ substantially from one another. In a conventional sterilization device, the ambient temperature drops from approximately 130°C to 90°C when the product reaches the liquid of the water leg. This results in the packaging, i.e. the outside, shrinking much more quickly than the contents, as a result of which pressure builds up in the packaging. In addition, the hydrostatic pressure on the product decreases when the product passes through the water leg, which leads to an additional increase in the pressure in the packaging. This problem is at least reduced by the invention by the fact that cooling of the product is already effected in the sterilization section without affecting the sterilization process, so that the cooling process already starts under the pressure in the sterilization space. As a result thereof, the temperature of the contents of the product is already reduced before the product reaches the water leg. This reduces the maximum pressure difference between the outside and the inside to a level which does not substantially permanently deform the packaging and leaves the adhesive layer or heat-sealed connection intact, as a result of which the packaging of the product remains sterile.

In an embodiment, the temperature of the liquid from the first atomizing device is substantially equal to, that is to say approximately equal to, the temperature of the liquid in the liquid column of the cooling section. This avoids the situation where both pressure and temperature variations occur almost simultaneously on the outside.

In an embodiment, the first and second atomizing devices comprise a spray nozzle and/or an atomizer. By using these means, heat is extracted from the product in a balanced manner.

In an embodiment, the heating section comprises a water leg which is partially filled with a first liquid column to produce hydrostatic pressure in an adjacent compartment, with a second atomizing device being provided in the water leg and being configured to heat the products in order to reduce the difference in temperature between the product and the liquid in the first liquid column before the products are passed through the first liquid column. These measures also aim to prevent both the ambient pressure and ambient temperature of the product from simultaneously undergoing excessive variations which may lead to permanent deformation of the product. The atomizing device comprises a spray nozzle and/or an atomizer.

In an embodiment, the heating section comprises at least two water legs and an intermediate compartment between two successive water legs, viewed in the direction of transport of the endless conveyor. The device is configured such that, during operation, a hydrostatic pressure prevails in the intermediate compartment which is between the atmospheric pressure and the hydrostatic pressure in the sterilization section. Furthermore, the device is configured to maintain the temperature in the intermediate compartment between the ambient temperature and the temperature in the sterilization space during operation. As a result thereof, both the pressure and the temperature outside the product increase relatively gradually during the heating process, as a result of which the maximum pressure difference between the inside and the outside of the packaging is reduced.

In an embodiment, the heating section comprises two or more intermediate compartments, in which, during operation, in successive intermediate compartments downstream the endless conveyor the temperature and/or the hydrostatic pressure increases. As a result thereof, the maximum pressure difference between the inside and the outside of the packaging is reduced further. In an embodiment, the temperature in successive compartments is in the range of 70 - 90°C and 110 - 125°C.

In an embodiment, the cooling section comprises at least two water legs and has an intermediate compartment between two successive water legs along the endless conveyor, in which, during operation, a hydrostatic pressure prevails which is between the atmospheric pressure and the hydrostatic pressure in the sterilization section. Furthermore, during operation, the temperature in the intermediate compartment is between the ambient temperature and the temperature in the sterilization section. As a result thereof, both the pressure and temperature outside the product decrease relatively gradually during the heating process, leading to a reduction in the maximum pressure difference between the inside and the outside of the packaging.

In an embodiment, the cooling section comprises two or more intermediate compartments, in which, during operation, in successive intermediate compartments downstream the endless conveyor the temperature and/or hydrostatic pressure decreases. As a result thereof, the maximum pressure difference between the inside and the outside of the packaging is reduced further. In an embodiment, the temperature in successive intermediate compartments of the cooling section is in the range of 90 - 60°C and 50 - 15°C.

In an embodiment, the duct through the sterilization section comprises, between the inlet leg and outlet leg, a first leg and a second leg. The first and second leg are separated from one another and form vertical steam duct parts. The steam duct parts are connected to one another at the bottom by means of a liquid lock. By dividing the sterilization space into separate spaces, air currents are less readily formed in the sterilization section. As a result thereof, the temperature in the sterilization section is distributed more evenly. In an embodiment, the pressure and temperature in the vertical steam duct parts are substantially equal.

In an embodiment, the device furthermore comprises a heat-exchanging device configured to extract heat from the cooling section and supply it to the heating section. This reduces the amount of energy per product to be sterilized. In a further embodiment, the heat-exchanging device is configured to extract heat from the liquid in the water leg of the cooling section which is connected to the outlet leg of the sterilization section and to supply it to the liquid from the atomizing device in the heating section. As a result thereof, the liquid in the water leg is constantly cooled and the extracted heat is used efficiently for heating in the heating section.

It is another aspect of the invention to provide an improved method for the sterilization of products, in particular a method in which fewer products are damaged during the sterilization process.

By means of an endless conveyor, the products are passed through a hydrostatic sterilization device comprising a duct formed by, successively, a heating section, a sterilization section and a cooling section, in which a part of the duct in the heating section and cooling section comprises a water leg with a liquid column in order for producing hydrostatic pressure in the sterilization section, and in which the duct comprises an inlet leg and an outlet leg in the sterilization section, in which the water leg of the heating section is connected to the inlet leg and the outlet leg is connected to the water leg in the cooling section. The method according to the invention is characterized by the step of atomizing a liquid in the outlet leg of the sterilization section, the liquid having a temperature which is lower than the temperature in the inlet leg, as a result of which the difference in temperature between the product and the liquid in the water leg of the cooling section is reduced before the product is passed through the liquid column of the cooling section. This prevents the temperature outside the product from changing excessively rapidly when passing through the liquid in the water leg, which would lead to the pressure difference between the pressure on the outside and inside of the packaging becoming excessively large, leading to permanent deformation of the packaging and/or at least partial detachment of the adhesive layer or heat-sealed connection between the tray and the lid.

It will be clear that the various aspects mentioned in this patent application can be combined and may each be considered individually for a divisional patent application.

### BRIEF DESCRIPTION OF THE FIGURES

These and other aspects, properties and advantages of the invention are described in more detail on the basis of the following description with reference to the drawings, in which identical reference numerals denote the same or similar parts, and in which:
Fig. 1 diagrammatically shows an embodiment of a sterilization device according to the invention; and
Fig. 2 shows an example of a product to be sterilized.

### DESCRIPTION OF EMBODIMENTS

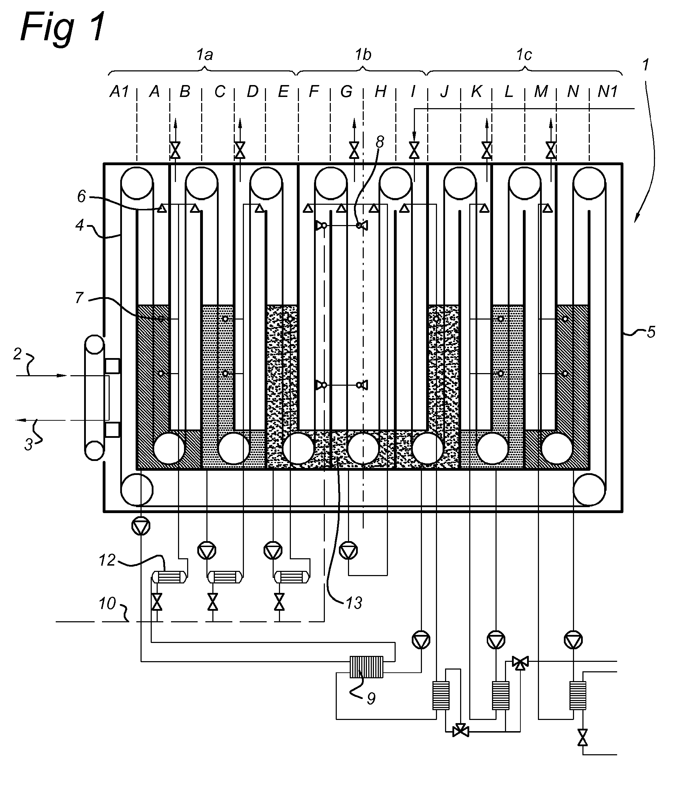

The sterilization process in a sterilization device or autoclave according to the invention is characterized by a process which proceeds continuously during the different phases of the sterilization path. This avoids having to heat and cool the mass of the sterilization device for each batch every time. The continuous process is described below with reference to the diagrammatic drawing shown in Fig. 1.

Fig. 1 diagrammatically shows a sterilization device 1 according to the invention. The sterilization device consists of a heating section 1a, a sterilization section 1b and a cooling section 1c. An endless conveyor 4 meanders through a duct in the sterilization device formed by the vertical sections A-N. Receptacles are provided on the endless conveyor 4 at regular distances and can be used to hold products in order to pass them through the sterilization device. The conveyor 4 may be in the form of a steel chain which has gondolas attached to it which can receive one or more products.

The sterilization device 1 in Fig. 1 comprises 16 columns A1, A - N, N1 through which the conveyor passes and in which the products alternately move upwards in an column and move downwards in the next column.

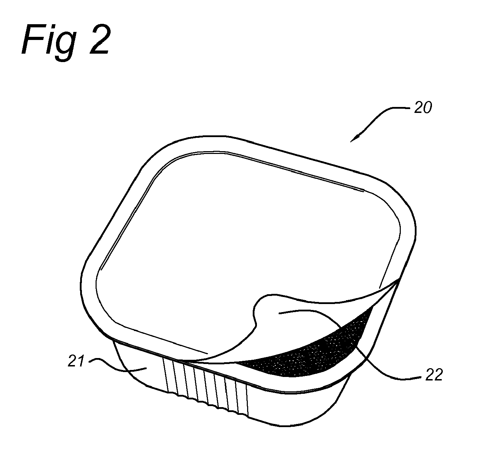

The products to be sterilized are placed in the receptacles in a continuous stream 2. The sterilized products are removed from the receptacles in another continuous stream 3 and carried away. An example of a product is shown in Fig. 2. In Fig. 2, the product is shown after the packaging has been partially opened. When the product is passed through the sterilization device, the packaging hermetically seals the contents. In this case, the packaging of the product 20 is tray 21 provided with a closure element 22 with a tab. The tray 21 and the closure element 22 are made from a material which can withstand the high temperature in the sterilization section 1b. The material may, for example, be a metal, for example thin aluminium, or a plastic (film). In an embodiment, the closure element 22 is glued to the tray 21 or fused thereto and thus hermetically seals the contents of the packaging. In another embodiment, the tray and lid are made from a plastic film and are fused together. In principle, the sterilization device 1 according to the invention can be used for the sterilization of any product at all, such as tin cans and glass jars, but is intended especially for packaging which can be damaged as a result of the difference in pressure on the inside and outside of the packaging becoming excessively large, as a result of which the packaging is permanently deformed or the hermetic sealing by the adhesive layer or the heat-sealed connection is broken. The packaging can be dented by excessively high pressure on the outside or bulging out by excessive pressure on the inside. Excessive pressure can be the result of water in the packaging becoming vaporized.

After a product has been placed in a receptacle, it is conducted upwards in the intake column A1 of the heating section 1a by the endless conveyor 4. The heating section is configured to heat the products gradually and to ensure that the product is not subjected to excessive temperature variations over time. The heating section 1a comprises six vertical columns A1, A - E. The columns or legs are alternately connected to one another at the top and bottom and form a continuous fluid-tight duct through which the endless conveyor 4 is passed. Three columns A, C, and E are partly filled with a liquid, preferably water, and form liquid columns or water legs for producing a hydrostatic pressure in the column which is connected to the liquid column at the bottom. At the top of the columns A, B, and D, atomizing devices are provided for uniformly spraying, atomizing or dispersing liquid onto the products. In the columns A1, B, and D, the direction of movement of the conveyor 4 is downwards and in the columns A, C and E, the direction of movement of the conveyor 4 is upwards. As a function of the size of the droplets of the liquid, an atomizing device 6 can result in a simple spraying, atomizing or dispersing action. These results are obtained by using known technical means.

Upon leaving the atomizing device, the liquid is at a certain temperature and the temperature of the product will change in the direction of this certain temperature by transfer of heat. Column B and the section of column C above the liquid column in column C form a first compartment between two liquid columns. A constant hydrostatic pressure and temperature prevail in the compartment. The temperature in the first compartment is determined by the temperature of the liquid from the atomizing device in column B. In the compartment, the contents of the product will gradually be heated and will take on the temperature prevailing in the compartment from the outside inwards. The hydrostatic pressure in the liquid column in column C increases again during the passage of the products up to the pressure level prevailing in column D. The same applies to the liquid column in column E, so that the hydrostatic pressure in the sterilization section is reached. Column D and the section of column E above the liquid column in column E form a second compartment between two liquid columns. In the second compartment, a constant hydrostatic pressure and a constant temperature prevail. The temperature in the second compartment is determined by the temperature of the liquid from the atomizing device in column D. In the second compartment, the contents will gradually heat up and take on the temperature in the second compartment from the outside inwards.

According to an embodiment of the invention, the temperature of the liquid in the water column in column A is in the range of 75 - 85°C, in particular substantially 80°C. Liquid is withdrawn from the connection space between column A and B which is filled with liquid, and supplied to the atomizing device 6 above the water column in A, an atomizing device at the top in column B and liquid intake points 7 by means of a pump. A heat exchanger 12 ensures that the temperature of the liquid reaches the desired temperature of 80°C. One or more liquid intake points are provided in a water column, so that the temperature of the liquid in a water column varies as little as possible and the product is thus at a substantially constant temperature during its passage through the water column, as a result of which the product heats up steadily.

Due to the atomizing device 6 above the water column in column A, the outside, i.e. the packaging, of the products is heated from an ambient temperature, for example 20°C, to a temperature close to the temperature of the liquid in the water column, for example 80°C, while they descend towards the water column. It is characteristic that during the descent, the air pressure in the space above the water column is constant and only the temperature of the product rises. As soon as the product reaches the liquid column, it descends further still into the liquid and the hydrostatic pressure on the product increases. By heating the product in a controlled manner beforehand by means of spraying or atomizing a liquid, the packaging initially expands. As a result thereof, the absolute pressure difference between the outside and inside initially increases. As the product in the packaging heats up, the pressure difference decreases again due to the contents expanding as a result of heating up. In the liquid column, the pressure difference increases again by the steady increase in hydrostatic pressure. If the products are not preheated, the absolute pressure difference can increase so rapidly that the packaging is permanently deformed, as a result of, on the one hand, the rapid heating of the packaging and, on the other hand, increases in hydrostatic pressure. The invention ensures that the maximum pressure difference is reduced during the heating process in the heating section 1a, as a result of which the risk of permanent deformation is reduced. According to the invention, initially the temperature difference between the product and liquid in the liquid column is reduced in column A and then the external pressure on the product is increased. In effect, the atomizing device ensures that the products are heated in order to reduce the difference in temperature between the product and the liquid in the liquid column before the products are passed through the first liquid column.

The heating section illustrated in Fig. 1 shows at least two liquid columns having an intermediate compartment between them. During operation, an air pressure prevails in the intermediate compartment which is between the atmospheric pressure and the hydrostatic pressure in the sterilization section 1b. In addition, the temperature in the intermediate compartment and the temperature of the liquid which is sprayed from above onto the products in the compartment by means of the atomizing device 6 is between the ambient temperature and the highest temperature in the sterilization space 1b.

When the endless conveyor 4 passes through several downstream sections in the heating section 1a, one or both external variables of temperature and hydrostatic pressure increase(s). By using several compartments and liquid columns, it is possible to design the heating process such that the temperature and pressure increase over time in such a manner that the pressure difference between the pressure outside the product and the pressure inside the product remains so low that the product is not damaged permanently. Downstream means in the direction in which the conveyor moves. It is therefore possible for a heating section 1a according to the invention to have two liquid columns and one intermediate compartment or N liquid columns and N-1 intermediate compartments, with N being an integer greater than 1. It is also possible for the heating section 1a to only comprise column A with an atomizing device 6 above the liquid column in column A.

In the device illustrated in Fig. 1, the temperature of the liquid from the atomizing device in columns A and B is in the range of 70 - 90°C and the liquid temperature in column D is in the range of 110 - 125°C. In an embodiment, the temperature of the liquid in the water columns A, C, and E is 70 - 90°C, 110 - 125°C, and 130-135°C, respectively. The hydrostatic pressure in the water column of column A gradually increases from 0 to 1.2 bar, in the water column of column C from 1.2 bar - 2.4 bar, and in column E from 2.4 bar to 3.6 bar. It will be clear that, depending on the temperature and pressure characteristics of the product, other temperature and pressure profiles are possible.

The sterilization section 1b in Fig. 1 consists of four sections F, G, H and I. In sections F, G, H and I, a constant hydrostatic pressure of, for example 3.6 bar, prevails. During operation, the direction of the conveyor 4 in sections F and H is upwards and in sections G and I, the direction of the conveyor is downwards. The pressure is required to keep any water which may be present in the packaging in liquid form at a sterilization temperature of substantially 130°C and to prevent it from becoming gaseous. If the water were to pass from its liquid form to its gaseous form, the pressure in the packaging would increase to such a degree that the packaging would bulge and would thus become permanently deformed and possibly even burst open. The packaging could burst open as a result of the packaging material tearing or the adhesive layer or heat-sealed connection between tray and lid becoming detached. It will furthermore be clear that when the sterilization temperature is higher, the hydrostatic pressure will also have to be higher in order to ensure that the liquid remains in liquid form. Sections F, G and H form a sterilization space in which a temperature prevails which is in the range of 130 - 135°C. In these sections, atomizing devices 6 are provided at the top for atomizing, spraying and/or dispersing water at a temperature in the abovementioned range of 130 - 135°C. Furthermore, steam injectors 8 are provided in order to keep the temperature in the sections F, G and H as uniform as possible. Sections F, G and H may form one large space through which the conveyor is in turn moved upwards, downwards and upwards. Preferably, the sterilization space comprises three or more columns which are separated by means of a partition wall. As a result thereof, the sterilization space becomes an elongate duct in which the temperature can be controlled more accurately and the temperature throughout the duct is kept more uniform or constant. Furthermore, the risk of air swirls or air currents is reduced, as a result of which the temperature in the sterilization space becomes more stable. A liquid lock 13 is provided between sections G and H in order to separate the sections from one another and to prevent air currents from flowing between sections G and H, making the transfer of heat from one section to another section less readily possible than if there were an open connection between columns G and H. Section F is an inlet leg which is connected to the liquid column in section E of the heating section 1a.

Section I of the sterilization section 1b is an outlet leg which is connected to a liquid column in section J of the cooling section. Section I is provided, at least at the top, with an atomizing device 6 which is configured to atomize a liquid, preferably water, having a temperature which is lower than the temperature in the sterilization space formed by the sections or columns F, G and H. In an embodiment, the temperature of the liquid is 95°C. The partition wall between section H and I forms a thermal separation between the sections. The atomizing device, which may comprise one or more spray nozzles, spray heads, nebulizers or atomizers, is preferably fitted below the upper edge of the wall between sections H and I. As a result thereof, the liquid from the atomizing device cannot enter directly into the sterilization space of column H. If this were to happen, this would result in undesired air currents in column H and in disturbances in the temperature distribution, as a result of which the sterilization process in column H would not proceed correctly. According to the invention, the sterilization process ends in a vertical column through which the conveyor conveys the products upwards and the products are passed through an open passage across a partition wall between the vertical columns to an adjacent column through which the products are conveyed downwards and in which the cooling process is started by spraying the products with a liquid from above before they leave the sterilization section on the underside via a liquid bath. It has been found that cooling in the sterilization section 1b prior to submerging the product in a first liquid column of the cooling section 1c prevents at least part of the water in the product from becoming vaporized as a result of the reduction in pressure in the water column. If water becomes vaporized as a result of pressure reduction, the pressure in the product increases exponentially, as a result of which the packaging can burst open or the adhesive layer or heat-sealed connection can become detached. A further advantage is the fact that, as a result of the selected structure, no undesired circulation of heat is produced as a result of large variations in temperature or transitions in the device. Since the cooled air descends in column I, it will not flow into column H. Furthermore, the liquid in liquid lock 13, which liquid has a temperature which is substantially equal to the temperature in the sterilization space in columns F, G and H, is adjacent to spaces in which the same temperature prevails. Thus, no undesirable transfer of heat is produced from column G to column H or vice versa.

The cooling section 1c in Fig. 1 comprises columns J, K, L, M, N, and N1. This structure shows great similarity to the heating section 1a, but in this case the action is opposite. The cooling section 1c is configured to gradually decrease the temperature of the product and the pressure outside the product.

After the product has passed through the sterilization section 1b and has been precooled in the discharge column I, it arrives in cooling section 1c. The cooling section 1c is configured to gradually cool the products down further and to prevent the product from being subjected to excessive temperature variations over time. The heating section 1c comprises six vertical columns J, K, L, M, N and N1. The columns or legs are alternately connected to one another at the top and bottom and form a continuous fluid-tight duct through which the endless conveyor 4 is passed. Three columns J, L, and N are partly filled with a liquid, preferably water, and form liquid columns or water legs for producing hydrostatic pressure in an adjacent column which is connected to the liquid column at the bottom. At the top of columns K and M, atomizing devices are fitted for evenly spraying or atomizing or dispersing liquid onto the products. In columns J, L, and N, the direction of movement of the conveyor 4 is upwards and in columns K, M and N1, the direction of movement of the conveyor 4 is downwards.

Column K and the section of column J above the liquid column in column J form a first intermediate compartment of the cooling section 1c between two liquid columns in columns J and L. In the first intermediate compartment, a constant hydrostatic pressure and temperature prevails. The temperature in the intermediate compartment is determined by the temperature of the liquid from the atomizing device in column K. In the compartment, the contents of the product will cool down and gradually, from the outside inwards, take on the temperature in the first intermediate compartment. In the liquid column in column J, the hydrostatic pressure during the passage of the products decreases to the level of the pressure which prevails in the intermediate compartment in column J. The same principle applies to the liquid column in column L and a second intermediate compartment formed by the section above the liquid column in column L and column M, so that the hydrostatic pressure in the liquid column in column L passes through a pressure range from the pressure in column K to the pressure in column M. Finally, there is a water column in column N, the pressure of which passes through a range from the pressure in column M to the atmospheric pressure outside the sterilization device 1. In the second intermediate compartment, a constant hydrostatic pressure and a constant temperature prevail. The temperature in the second intermediate compartment is determined by the temperature of the liquid from the atomizing device in column M. In the second compartment, the contents of the product will gradually cool down and, from the outside inwards, take on the temperature prevailing in the second compartment.

Furthermore, the intermediate compartments in columns K and M are provided with atomizing devices 6 at the upper side of the columns which moisten the products with a liquid having a temperature which is substantially equal to the temperature of the liquid in the water column which follows the respective column through which the product is conveyed downwards. As a result thereof, the product is precooled before it is submerged in the liquid of the water column and a temperature shock due to the immersion is prevented.

According to an embodiment of the invention, the temperature of the liquid in the water column in column J is at a temperature in the range of 80 - 95°C, in particular substantially 90°C. Liquid is withdrawn from the connecting space or connecting duct situated on the bottom side between column J and K, which is filled with liquid, and supplied to the atomizing device 6 at the top of column I by means of a pump, and liquid intake points 7 in column J. The temperature of the liquid in the connecting duct will increase due to heat emission from the products which leave the sterilization space, i.e. column H. A heat exchanger 9 ensures that the temperature of the liquid withdrawn from the connection space has the desired temperature of, for example, 90°C. In a water column, one or more liquid intake points 7 are provided, so that the temperature of the liquid in a water column varies as little as possible and the product is at a substantially constant temperature during its passage through the water column, as a result of which the product cools down steadily.

The temperature in column I remains at approximately 95°C due to the continuous supply of liquid from the atomizing device 6 and the supply of heat via the sterilized products which initially have a temperature of 130°C. The cooled liquid from heat exchanger 9 is also supplied by means of intake pieces 7 to the water column in column J in order to keep the temperature in the range of 80 - 95°C. Cooling can be effected by heating the liquid which is withdrawn from the connection between column A and B. Thus, the heat which is extracted during the cooling process is used for the heating process in the heating section 1a.

The cooling section illustrated in Fig. 1 shows at least two liquid columns with an intermediate compartment in between. During operation, an air pressure prevails in the intermediate compartment which is between the atmospheric pressure and the hydrostatic pressure in the sterilization section 1b. In addition, the temperature in the intermediate compartment and the temperature of the liquid which is sprayed onto the products in the compartment from above by means of the atomizing device 6 is between the ambient temperature and the lowest temperature in the sterilization space 1b.

When the endless conveyor 4 passes through successive downstream sections of the cooling section 1c, then one or both external variables of temperature and hydrostatic pressure decrease(s) in each successive section. In successive intermediate compartments, the temperature decreases and in successive water columns both the pressure and the temperature decrease. By using several compartments and liquid columns, it is possible to design the cooling process such that the temperature and pressure decrease over time in such a manner that the pressure difference between the pressure outside the product and the pressure inside the product remains so low that the product is not permanently damaged. It is thus possible for a cooling section 1c according to the invention to have two liquid columns and one intermediate compartment or Q liquid columns and Q-1 intermediate compartments, with Q being an integer greater than 1.

In the device illustrated in Fig. 1, the temperature of the liquid from the atomizing device in column K is in the range of 60 - 90°C and the liquid temperature in column M is 15 - 50°C. In an embodiment, the temperature of the liquid in the water columns J, L, and M is in the range of 80 - 95°C, 50 - 70°C, and 15 - 30°C, respectively. The hydrostatic pressure in the water column of column J gradually decreases from 3.6 to 2.4 bar, in the water column of column L from 2.4 bar - 1.2 bar, and in column M from 1.2 bar to 0 bar. It will be clear that, depending on the temperature and pressure characteristics of the product, other temperature and pressure profiles are possible.

The sterilization device 1 is furthermore connected to a steam pipe 10 for supplying heat to the sterilization device. The steam pipe 10 is connected to heat exchangers 12 in order to raise the heating section 1a to the desired temperature and maintain it. Furthermore, the steam pipe is connected to steam distributors or injectors 8 in the sterilization section 1b in order to introduce steam into the columns F, G and H of the sterilization section 1b and to keep the temperature constant.

According to the invention, in the heating stage, the transfer of heat is alternately achieved by spraying (sprinkling) and immersion. In the sterilization stage, steam is injected and spraying is also carried out to improve the transfer of heat and the cooling stage is started in the sterilization section. In the cooling stage, the transfer of heat is alternately achieved by spraying and immersion. After the cooling stage, the products are removed from the receptacles of the conveyor 4 and the continuous production process can be continued by labelling and packaging lines.

It will be clear that instead of one conveyor 4, several conveyors are provided next to one another in the sterilization device. It will furthermore be clear that the number of columns in any section can be modified to suit the preconditions for the entire sterilization process. Thus, the speed of the conveyor and the number of columns and the height thereof determine how long a product will remain in a column or section and how quickly the pressure in a water column increases or decreases. Thus, product size, weight, and product composition determine how much time is required, given a certain temperature of the air or the water, to heat or cool the product to a desired temperature through to its core and to achieve the correct degree of sterilization.

The above-described measures for constructing a sterilization device according to the invention can, of course, be applied separately or in parallel or in a different combination or may be supplemented by further measures, with the embodiment substantially depending on the type of product to be sterilized. The invention is not limited to the illustrated embodiments. Modifications can be made without departing from the inventive idea. Thus, for example, atomizing devices 6 can be fitted above several water columns, with the temperature of the liquid from the atomizing device 6 substantially corresponding to the temperature of the liquid in the water column beneath it in the heating section 1a.

## Claims

1. Hydrostatic sterilization device comprising: a heating section, a sterilization section and a cooling section, in which the heating section, sterilization section and cooling section form a continuous duct through which an endless conveyor comprising a number of receptacles for accommodating products passes, and in which a part of the duct, in the heating section and the cooling section, comprises a water leg containing a liquid column for producing hydrostatic pressure in the sterilization section, and in which the duct, in the sterilization section, comprises an inlet leg and an outlet leg, in which the water leg of the heating section is connected to the inlet leg and the outlet leg is connected to the water leg in the cooling section;
**characterized in that**
the outlet leg is provided, at least on the upper side, with a first atomizing device for atomizing a liquid which has a temperature which is lower than the temperature in the inlet leg, configured to reduce the difference in temperature between the product and the liquid in the water leg of the cooling section before the product is passed through the liquid column of the cooling section, and **in that** the heating section comprises a second atomizing device which is configured to heat products before the products are passed through a liquid column of the heating section in order to reduce the difference in temperature between the product and the liquid in said liquid column.

2. Device according to Claim 1, **characterized in that** the temperature of the liquid from the first atomizing device is substantially equal to the temperature of the liquid in the liquid column of the cooling section.

3. Device according to one of Claims 1 - 2, **characterized in that** the first and second atomizing devices comprise a spray nozzle and/or an atomizer.

4. Device according to one of Claims 1 - 3, in which the heating section comprises at least two water legs and has an intermediate compartment between two successive water legs along the endless conveyor, in which a hydrostatic pressure prevails during operation which is between the atmospheric pressure and the hydrostatic pressure in the sterilization section, **characterized in that,** during operation, the temperature in the intermediate compartment is between the ambient temperature and the temperature in the sterilization space.

5. Device according to Claim 4, **characterized in that** the heating section has two or more intermediate compartments, in which, during operation, in successive intermediate compartments downstream the endless conveyor the temperature and/or the hydrostatic pressure increases.

6. Device according to Claim 5, **characterized in that** downstream the endless conveyor the temperature in successive compartments is in the range of 70 - 90°C and 110 - 125°C.

7. Device according to one of Claims 1 - 6, in which the cooling section comprises at least two water legs and has an intermediate compartment between two successive water legs along the endless conveyor, in which, during operation, a hydrostatic pressure prevails which is between the atmospheric pressure and the hydrostatic pressure in the sterilization section, **characterized in that**, during operation, the temperature in the intermediate compartment is between the ambient temperature and the temperature in the sterilization section.

8. Device according to Claim 7, **characterized in that** the cooling section has two or more intermediate compartments, in which, during operation, in successive intermediate compartments downstream the endless conveyor the temperature and/or hydrostatic pressure decreases.

9. Device according to Claim 8, **characterized in that** downstream the endless conveyor the temperature in successive intermediate compartments is in the range of 90 - 60°C and 50 - 15°C.

10. Device according to one of Claims 1 - 9, **characterized in that** the duct through the sterilization section comprises, between the inlet leg and the outlet leg, a first leg and a second leg which are separated from one another and form vertical steam duct parts which are connected to one another at the bottom by a liquid lock.

11. Device according to Claim 10, **characterized in that** the pressure and temperature in the vertical steam duct parts are substantially equal.

12. Device according to Claim 1, **characterized in that** the device furthermore comprises a heat-exchanging device configured to extract heat from the cooling section and supply it to the heating section.

13. Device according to Claim 12, **characterized in that** the heat-exchanging device is configured to extract heat from the liquid in the water leg of the cooling section which is connected to the outlet leg of the sterilization section and to supply it to the liquid of the atomizing device in the heating section.

14. Method for the sterilization of products, in which the products, by means of an endless conveyor, are passed through a hydrostatic sterilization device comprising a duct formed by, successively, a heating section, sterilization section and cooling section, in which a part of the duct in the heating section and cooling section comprises a water leg with a liquid column for producing hydrostatic pressure in the sterilization section, and in which the duct comprises an inlet leg and an outlet leg in the sterilization section, in which the water leg of the heating section is connected to the inlet leg and the outlet leg is connected to the water leg in the cooling section;
**characterized in that** the method comprises the step of
atomizing a liquid in the outlet leg of the sterilization section, the liquid having a temperature which is lower than the temperature in the inlet leg, as a result of which the difference in temperature between the product and the liquid in the water leg of the cooling section is reduced before the product is passed through the liquid column of the cooling section
atomizing a liquid in a leg of the heating section before the products are passed through a liquid column of the heating section in order to reduce the difference in temperature between the product and the liquid in said liquid column.

15. Sterilization process for the sterilization of products, **characterized by** supplying products to the device according to one of Claims 1 - 13 and by supplying steam to the latter.
